# EUROPEAN PATENT APPLICATION

(11) **EP 2 549 351 A1**
(43) Date of publication of application: **23.01.2013**
(21) Application number: 11756221.5
(22) Date of filing: 14.03.2011
(51) Int. Cl.: G05B 23/02, H01L 31/04, H02J 13/00

(54) **SOLAR POWER PLANT MONITORING SYSTEM**

(30) Priority: 19.03.2010 JP 2010064995
(71) Applicant: Sharp Kabushiki Kaisha, Osaka-shi, Osaka 545-8522 (JP)
(72) Inventor: YAMAKAWA Akiko, Osaka-shi Osaka 545-8522 (JP); YOSHIMI, Naoki, Osaka-shi Osaka 545-8522 (JP)
(74) Representative: Müller - Hoffmann & Partner
(86) International application number: PCT/JP2011/055893
(87) International publication number: WO 2011/115036

(57) **Abstract**

Disclosed is a solar power plant monitoring system for monitoring a solar power plant, the system being provided with a storage unit for associating identification codes of a plurality of different types of apparatuses to be monitored which constitute the solar power plant, so as to correspond with interconnections between the plurality of different types of apparatuses to be monitored which constitute the solar power plant; and for storing the associations.

## Description

### Technical Field

The present invention relates to a solar power plant monitoring system for monitoring a solar power plant.

### Background Art

In recent years, the heightened importance of protecting the environment of the earth has been accompanied by greater expectations for solar power. At present, in Japan, small-scale solar power systems for residential use, as well as medium-scale solar power systems for public/commercial use are typical; however, in the US, Europe, and regions of Asia, aggressive introduction of MW-class large-scale solar power plants is planned.

### List of Citations

### Patent Literature

Patent Literature 1 Japanese Laid-Open Patent Application 2004-221479
Patent Literature 2 Japanese Laid-Open Patent Application 2004-260015

### Summary of Invention

### Technical Problem

In large-scale solar power plants, large numbers of solar cell strings, junction boxes, collector boxes, inverters, transformers, and the like are disposed in dispersed fashion throughout a wide area, and therefore the introduction of monitoring systems capable of remote monitoring thereof is being studied.

The Supervisory Control And Data Acquisition (SCADA) system is one known monitoring system. However, ordinary SCADA systems of the sort introduced previously in thermal power plants and tower-type buildings cannot be considered to fully conform with the specifications necessary for a monitoring system for monitoring a large-scale solar power plant (in terms of the apparatuses being monitored, the number of apparatuses being monitored, the content being monitored, or other parameters).

Patent Literature 2 discloses a small-scale solar power plant system for residential use, wherein detection of a malfunction of an individual solar cell module and detection of the location of the malfunctioning solar cell module are carried out. However, Patent Literature 2 contemplates a small-scale solar power plant system for residential use, and therefore does not envisage a facility furnished with large numbers of connection boxes, collector boxes, inverters, transformers, or the like, and neither discloses nor suggests any guideline as to the mode of presentation of an abnormality in the event that an abnormality has been detected in a plurality of monitored apparatuses of different types in a large-scale solar power plant, so that repair may be carried out efficiently by maintenance personnel.

With the foregoing in view, it is an object of the present invention to offer a solar power plant monitoring system whereby, when an abnormality has been detected, repair may be carried out efficiently by a maintenance operator.

### Solution to Problem

The solar power plant monitoring system according to the present invention intended to achieve the stated object resides in a solar power plant monitoring system for monitoring a solar power plant, provided with a storage unit for associating identification codes of a plurality of different types of apparatuses to be monitored which constitute the solar power plant, so as to correspond with interconnections between the plurality of different types of apparatuses to be monitored which constitute the solar power plant; and for storing the associations.

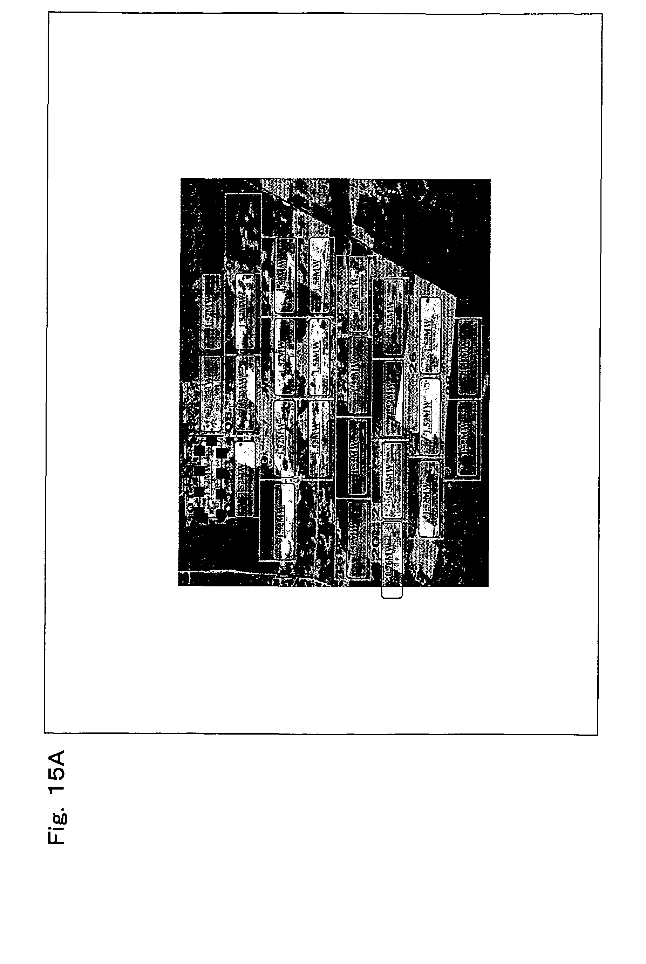

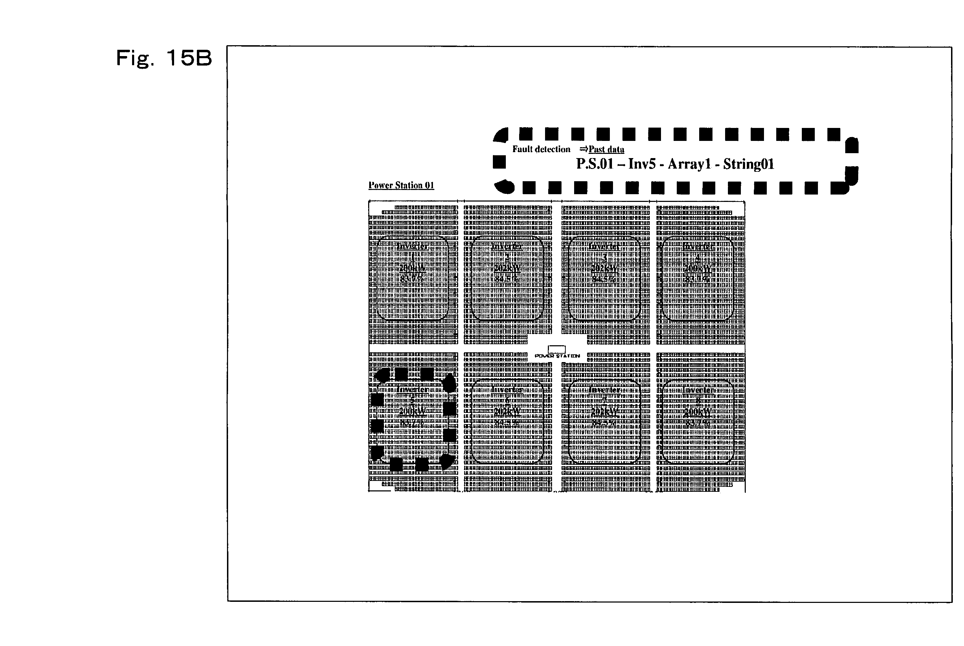

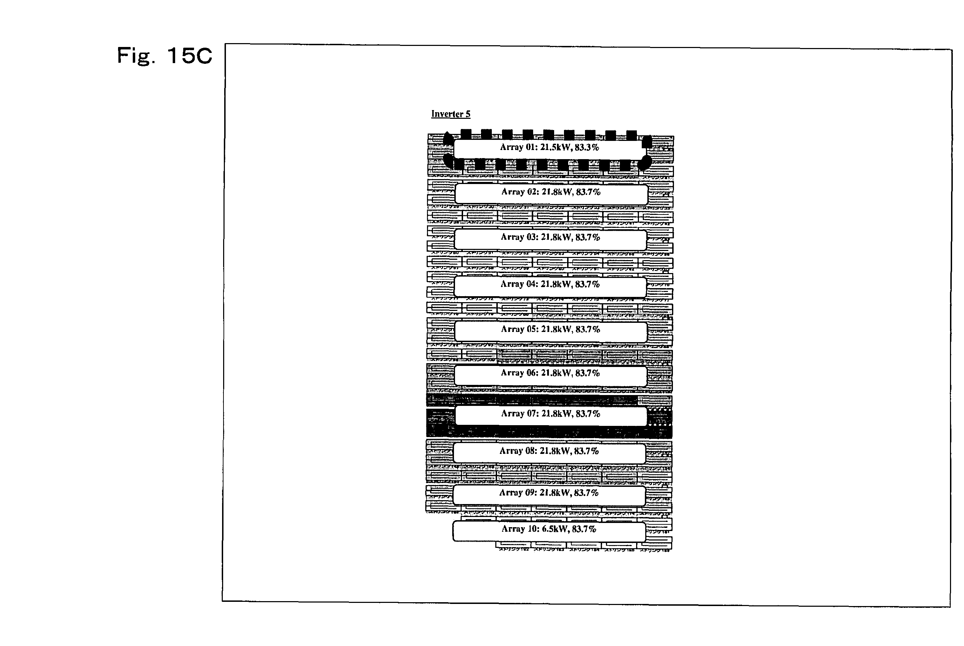

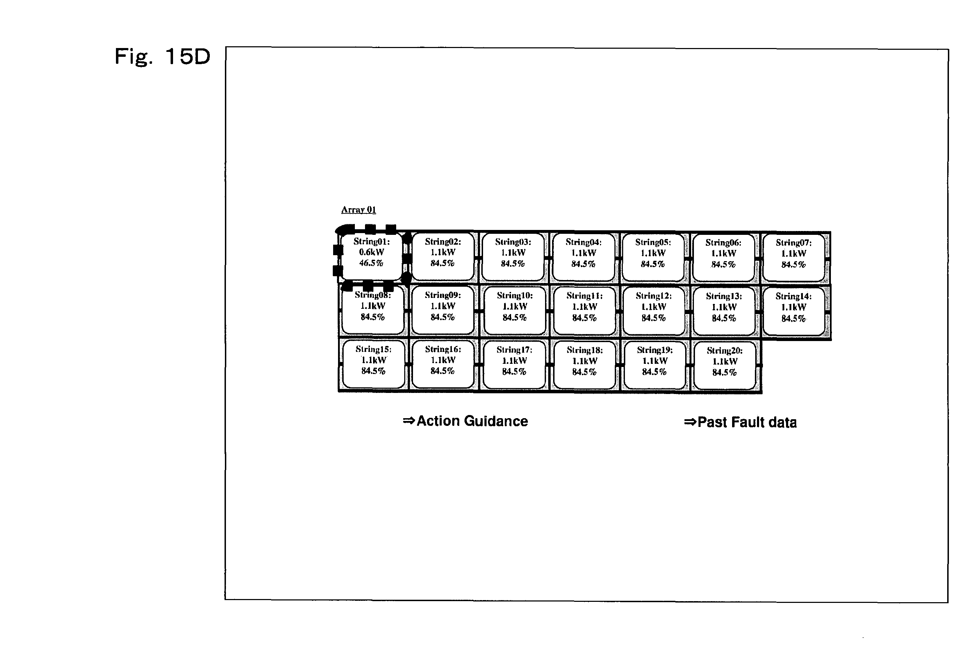

In a mode of correspondence with interconnections between a plurality of different types of monitored apparatuses constituting the solar power plant (for example, in the embodiment discussed below, transitioning in order from the alert display screen of Fig. 15A → Fig. 15B → Fig. 15C → Fig. 15D; direct advance from the alert display screen of Fig. 15A→ Fig. 15D; the red flashing display in Fig. 15B (depicted in the drawing as a heavy dotted line), display of an identification code, or the like), it is possible to output (e.g., display or print) information relating to a monitored apparatus in which a problem has occurred. In so doing, in a case in which problems have occurred in a plurality of different types of apparatuses, the user can readily ascertain whether, among apparatuses in which a problem has occurred, there is a risk that the problem is occurring in an apparatus closer to the power system due to the influence of an apparatus further away from the power system, and the user (maintenance operator) can efficiently carry out repairs. Specifically, if the apparatuses in which problems have occurred belong to the same system, among the apparatuses in a state in which problems have occurred, there is a risk that the problem is occurring in an apparatus closer to the power system due to the influence of an apparatus further away from the power system; conversely, if apparatuses in which problems have occurred do not belong to the same system, it can be decided that there is an extremely low likelihood that the problems in apparatuses in which problems have occurred are interrelated. It then possible to determine, from the interconnections of the plurality of different types of monitored apparatuses, whether apparatuses in states in which a problem has occurred belong to the same system or not.

Associations of identification codes of a plurality of different types of apparatuses to be monitored which constitute the solar power plant are used to output information relating to interconnections between apparatuses in which problems have occurred (for example, in the embodiment discussed below, the red flashing display in Fig. 15B (depicted as a heavy dotted line), display of an identification code, or the like).

A first storage unit, which is the aforementioned storage unit, or a second storage unit, which is separate from the first storage unit, associates and stores an address code of an installation location and the identification code for each of the plurality of different types of apparatuses to be monitored which constitute the solar power plan.

In so doing, it is possible to output information relating to the installation location of a monitored apparatus in which is problem has occurred, and therefore the user (maintenance operator) can readily track down the installation location of the monitored apparatus in which the problem has occurred.

The address codes of the installation locations can be, for example, address codes specifying, by rows and columns, partitions obtained by partitioning an area of the solar power plant into grid form.

The first storage unit, the second storage unit, or a third storage separate from both the first storage unit and the second storage unit, stores map data for the area of the solar power plant, and correspondence relationships between the map data and the address codes.

In so doing, it is possible to output map information relating to the installation location of a monitored apparatus in which a problem has occurred, and therefore the user (maintenance operator) can readily track down the installation location of the monitored apparatus in which the problem has occurred.

### Advantageous Effects of the Invention

With the solar power plant monitoring system according to the present invention, in a mode corresponding to interconnections between a plurality of different types of apparatuses to be monitored which constitute a solar power plant, it is possible to output information relating to a monitored apparatus in which a problem has occurred, and therefore, when an abnormality has been detected, a maintenance operator can efficiently carry out repairs.

### Brief Description of Drawings

[Fig. 1] A diagram showing a configuration example of a large-scale solar power plant.
[Fig. 2] A diagram showing a simplified configuration of a solar power plant monitoring system according to an embodiment of the present invention.
[Fig. 3] A diagram showing a simplified configuration example of a data transfer apparatus.
[Fig. 4] A diagram showing a simplified configuration example of a server computer.
[Fig. 5] A diagram showing a simplified configuration example of a personal computer.
[Fig. 6] A diagram showing an example of a monitoring screen.
[Fig. 7] A diagram showing another example of a monitoring screen.
[Fig. 8] A diagram showing yet another example of a monitoring screen.
[Fig. 9] A diagram showing yet another example of a monitoring screen.
[Fig. 10] A diagram showing yet another example of a monitoring screen.
[Fig. 11] A diagram showing yet another example of a monitoring screen.
[Fig. 12] A diagram showing yet another example of a monitoring screen.
[Fig. 13] A diagram showing yet another example of a monitoring screen.
[Fig. 14] A diagram showing yet another example of a monitoring screen.
[Fig. 15A] A diagram showing an example of a monitoring screen when an alert is issued.
[Fig. 15B] A diagram showing an example of a monitoring screen when an alert is issued.
[Fig. 15C] A diagram showing an example of a monitoring screen when an alert is issued.
[Fig. 15D] A diagram showing an example of a monitoring screen when an alert is issued.
[Fig. 16] A diagram showing a data table associating identification codes of different types of apparatuses.
[Fig. 17] A diagram showing a data table associating identification codes of apparatuses, and address codes of installation locations.

### Description of Embodiments

Embodiments of the present invention are described below with reference to the drawings.

### «Large-scale solar power plant»

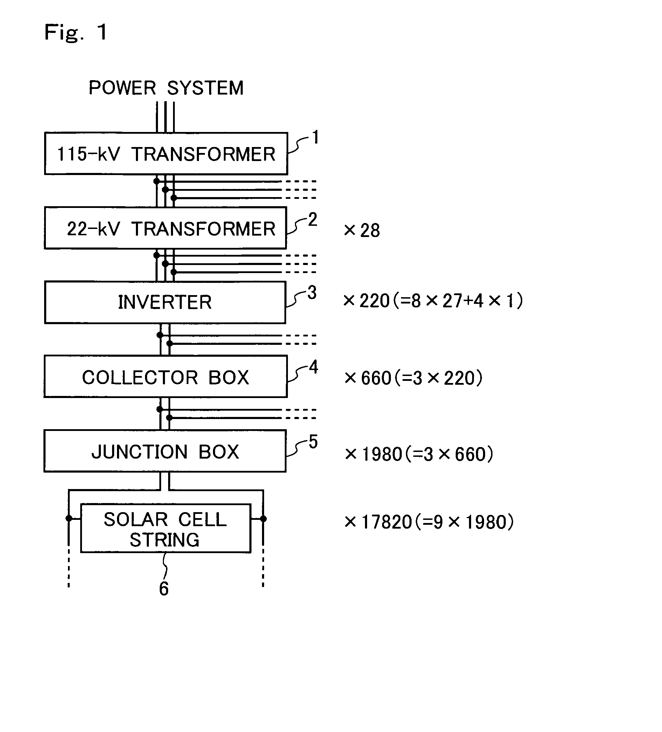

First, a large-scale solar power plant will be described. A configuration example of a large-scale solar power plant is shown in Fig. 1.

The large-scale solar power plant shown in Fig. 1 is a 73 MW dc class large-scale solar power plant provided with a single 115-kV transformer 1, 28 22-kV transformers 2, 220 inverters 3, 660 collector boxes 4, 1,980 junction boxes 5, and 17,820 4.1 kW class solar cell strings 6.

A power system is connected to the high-voltage end of the 115-kV transformer 1, and the 28 22-kV transformers 2 are connected at the high-voltage end thereof to the low-voltage end of the 115-kV transformer 1. Eight of the inverters 3 are connected at the output end thereof to the low-voltage end of each of 27 of the 28 22-kV transformers 2, while four of the inverters 3 are connected at the output end thereof to the low-voltage end of the remaining one 22-kV transformer 2. Three collector boxes 4 are connected at the output end thereof to the input end of each of the inverters 3.

Three junction boxes 5 are connected at the output end thereof to the input end of each of the 660 collector boxes 4. Nine 4.1 kW class solar cell strings 6 are then parallel-connected to the input end of each of the junction boxes 5.

The 22-kV transformers 2 and the eight or four inverters 3 connected thereto are installed in the same building (inverter housing), and each of the 22 kV transformers 2 is installed in a separate inverter housing. Consequently, 28 inverter housings are furnished. The 115-kV transformer 1 is installed inside an electrical substation facility.

The 115-kV transformer 1 has a protective relay (not shown) for the 115-kV transformer, and each of the 22-kV transformers 2 has a protective relay (not shown) for the22-kV transformer. A switchgear (not shown) for the 115-kV transformer is installed at the high voltage end of the 115-kV transformer 1, and switchgears (not shown) for the 22-kV transformer are respectively installed at the high voltage end and the low voltage end of each of the 22-kV transformers 2.

As devices for measuring meteorological phenomenon, four actinometers (three installed on a diagonal plane, and one installed on a horizontal plane), three thermometers for measuring the outside temperature, eight thermometers for measuring the back surface temperature of the solar cell modules which are the constituent components of the 4.1 kW class solar cell strings 6, three wind gauges, three hygrometers, and three rain gauges are disposed at predetermined measurement points (none are shown) within the grounds of the large-scale solar power plant shown in Fig. 1.

Furthermore, within each inverter housing is installed a thermometer for measuring the ambient temperature inside the inverter housing, an air conditioner, a breaker for the air conditioner, an illumination apparatus, a breaker for the illumination apparatus, and an instrument for measuring power consumption by the air conditioner and the illumination apparatus (none are shown).

### «Solar power plant monitoring system»

Next, a solar power plant monitoring system will be described, in the regard to its configuration, monitored content, and display content and control content of PC for operation.

### <Configuration>

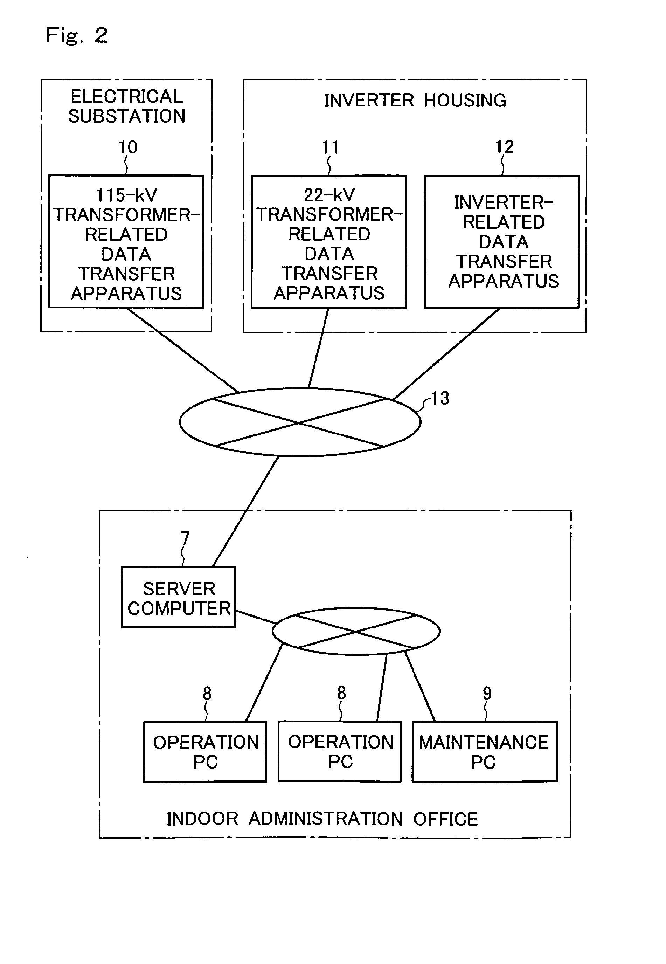

Fig. 2 shows a simplified configuration of a solar power plant monitoring system according to an embodiment of the present invention adapted to monitor the large-scale solar power plant shown in Fig. 1.

The solar power plant monitoring system according to the embodiment of the present invention shown in Fig. 2 is provided with one server computer 7, two operation personal computers (PC) 8, one maintenance PC 9, one 115-kV transformer-related data transfer apparatus 10 (hereinafter abbreviated to "data transfer apparatus 10") for transferring data related to the 115-kV transformer 1, at least one 22-kV transformer-related data transfer apparatus 11 (hereinafter abbreviated to "data transfer apparatus 11") for transferring data related to the 22-kV transformers 2, and at least one inverter-related data transfer apparatus 12 (hereinafter abbreviated to "data transfer apparatus 12") for transferring data related to the inverters 3.

The data transfer apparatus 10 receives data from the protective relay for the 115-kV transformer, and transmits it to the server computer, as well as receiving a start-stop signal (a start-stop signal for which the protective relay for the 115-kV transformer is the target apparatus) sent from the operation PC 8 through the server computer 7, and transmitting it to the protective relay for the 115-kV transformer.

The data transfer apparatus 11 receives data from the protective relays for the 22-kV transformers, and transmits it to the server computer 7, as well as receiving a start-stop signal (a start-stop signal for which the protective relays for the 22-kV transformers are the target apparatuses) sent from the operation PC 8 through the server computer 7, and transmitting it to the protective relays for the 22-kV transformers. The number of data transfer apparatuses 11 is chosen in view of the processing capability of the data transfer apparatuses 11, and is a quantity necessary to process data communications between the server computer 7 and the 28 protective relays for the 22-kV transformers and with no delay.

The data transfer apparatus 12 receives data from the inverters 3 and transmits it to the server computer 7; receives data from the meteorological-related measuring apparatuses, and transmits it to the server computer 7; receives data from the thermometers inside the inverter housings, from the air conditioner breakers, from the illumination apparatus breakers, and from the instrument for measuring power consumption, and transmits it to the server computer 7; receives data from the junction boxes 5, and transmits it to the server computer 7; receives a start-stop signal (a start-stop signal for which the inverters 3 are the target apparatuses, a start-stop signal for which the air conditioner breakers are the target apparatuses, or a start-stop signal for which the illumination apparatus breakers are the target apparatuses) sent to it from the operation PC 8 through the server computer 7, and transmits it to the inverters 3, the air conditioner breakers, or the illumination apparatus breakers. The number of data transfer apparatuses 12 is selected in view of the processing capability of the data transfer apparatuses 12, and is a quantity necessary to process data communications between the server computer 7 and the 220 inverters 3, the 1,980 junction boxes 5, the 28 conditioner breakers, and the 28 illumination apparatus breakers, with no delay.

The server computer 7, the operation PC 8, and the maintenance PC 9 are connected in a local area network (LAN) over Ethernet™ or the like. The server computer 7 and the data transfer apparatuses 10 to 12 perform optical communication via an optical network 13.

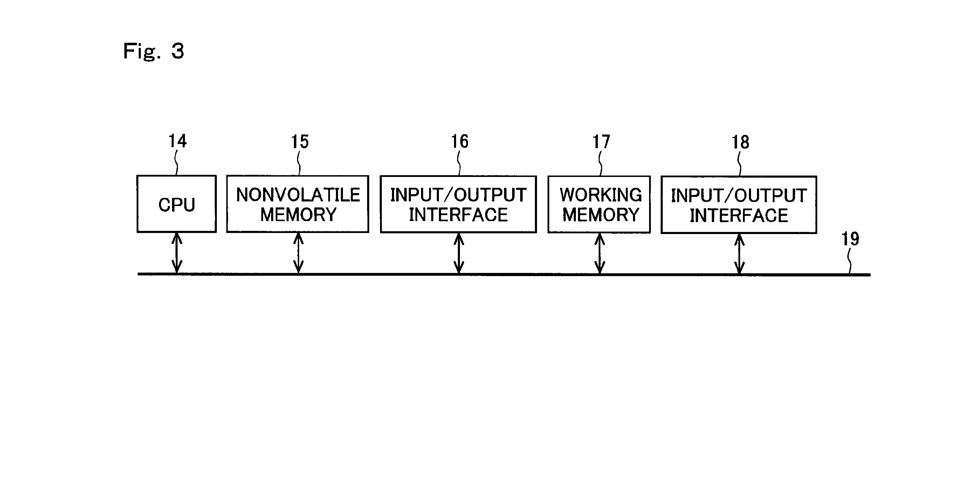

A simplified configuration example of a data transfer apparatus capable of being employed as the data transfer apparatuses 10 to 12 is shown in Fig. 3. The data transfer apparatus shown in Fig. 3 is provided with a central processing unit (CPU) 14, a nonvolatile memory 15, an input/output interface 16, a working memory 17, an input/output interface 18, and a bus 19. The CPU 14 and the various sections (the nonvolatile memory 15, the input/output interface 16, the working memory 17, and the input/output interface 18) are connected via the bus 19. The data transfer apparatus shown in Fig. 3 can be realized, for example, by a programmable controller or a personal computer.

In accordance with a sequence program saved in the nonvolatile memory 15, the CPU 14 temporarily saves to the working memory 17 data that was acquired at predetermined timing from external sections (in the present embodiment, the protective relay for the 115-kV transformer, the protective relays for the 22-kV transformers, the inverters 3, the meteorological-related measuring apparatuses, the thermometers inside the inverter housings, the air conditioner breakers, the illumination apparatus breakers, the instrument for measuring power consumption, or the junction boxes 5), via the input/output interface 16, and thereafter outputs the data in a predetermined format (in the present embodiment, as an optical signal) at predetermined timing to an external section (in the present embodiment, the server computer 7) via the input/output interface 18.

When a start-stop signal is input to the input/output interface 18, the input/output interface 18 modifies the format of the start-stop signal (in the present embodiment, modifies it from an optical signal to an electrical signal). In accordance with a sequence program saved in the nonvolatile memory 15, the CPU 14 outputs the signal of modified format to external sections (in the present embodiment, the protective relay for the 115-kV transformer, the protective relays for the 22-kV transformers, the inverters 3, the air conditioner breakers, or the illumination apparatus breakers) via the input/output interface 16.

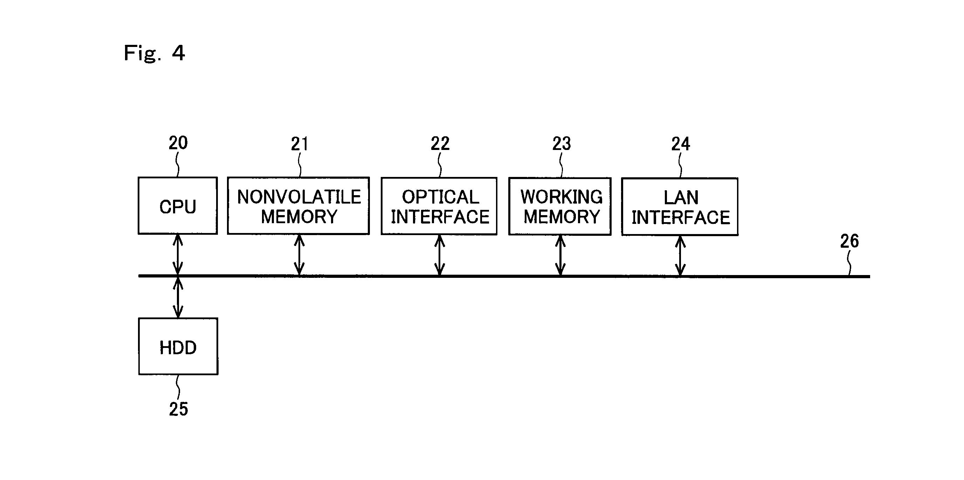

Next, a simplified configuration example of the server computer 7 is shown in Fig. 4. In the simplified configuration example shown in Fig. 4, the server computer 7 is provided with a CPU 20, a nonvolatile memory 21, an optical interface 22, a working memory 23, a LAN interface 24, a hard disk drive (HDD) 25, and a bus 26. The CPU 20 and the other sections (the nonvolatile memory 21, the optical interface 22, the working memory 23, the LAN interface 24, and the HDD 25) are connected via the bus 26.

The CPU 20 controls the sections (the nonvolatile memory 21, the optical interface 22, the working memory 23, the LAN interface 24, and the HDD 25) in accordance with a SCADA server program saved in the nonvolatile memory 15.

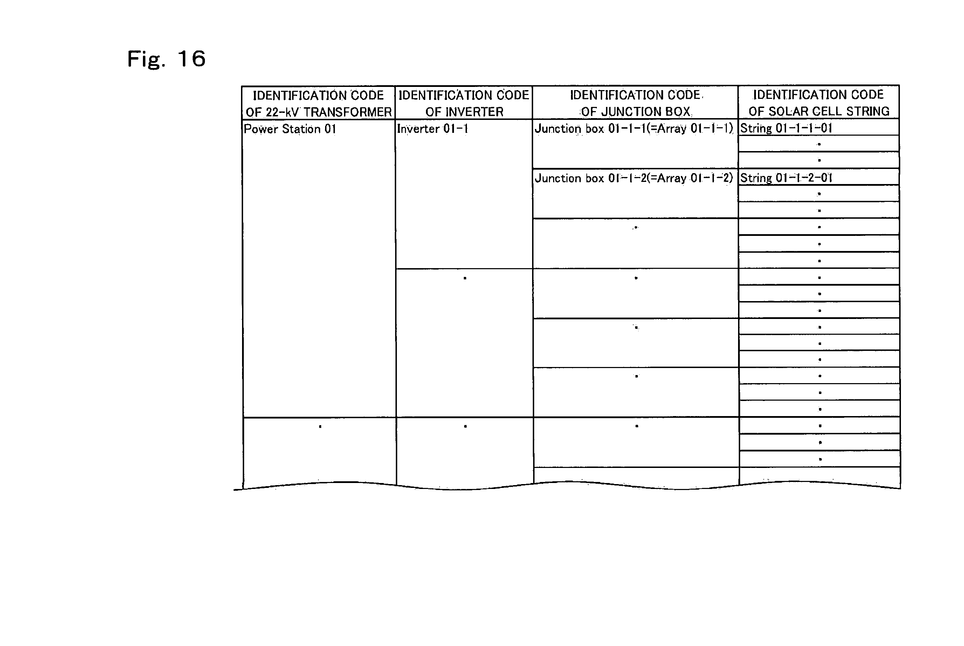

In the nonvolatile memory 15 there are stored identification codes of the 28 22-kV transformers 2, identification codes of the 220 inverters 3, identification codes of the 1,980 junction boxes 5, and identification codes of the 17,820 4.1 kW class solar cell strings 6, the identification codes of the different types of apparatuses being associated so as to correspond with interconnections between the different types of apparatuses (for example, see the data table shown in Fig. 16).

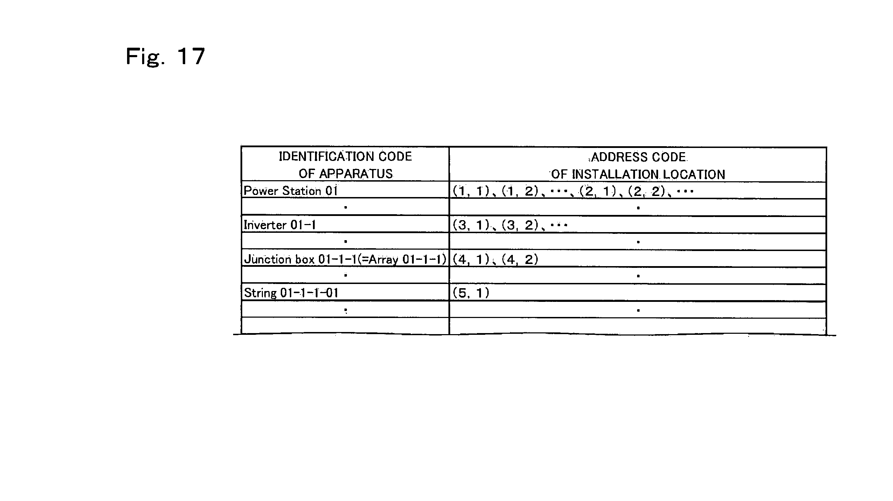

Also, the identification codes of the apparatuses and address codes of the installation locations of the apparatuses are stored in associated form in the nonvolatile memory 15 (for example, see the data table shown in Fig. 17). In the example of Fig. 17, the area of the solar power plant is partitioned into grid form, each partition being assigned an area code specifying it by row and column (in the address code (X, Y) of an installation location, X shows the row and Y shows the column). The nonvolatile memory 15 also stores map data for the area of the solar power plant, and stores correspondence relationships between the map data and the address codes. In the present embodiment, the data table shown in Fig. 16, the data table shown in Fig. 17, and the data relating to correspondence relationships between the map data and the address codes are all stored in the same storage section (the nonvolatile memory 15); however, storage in separate memories is also acceptable.

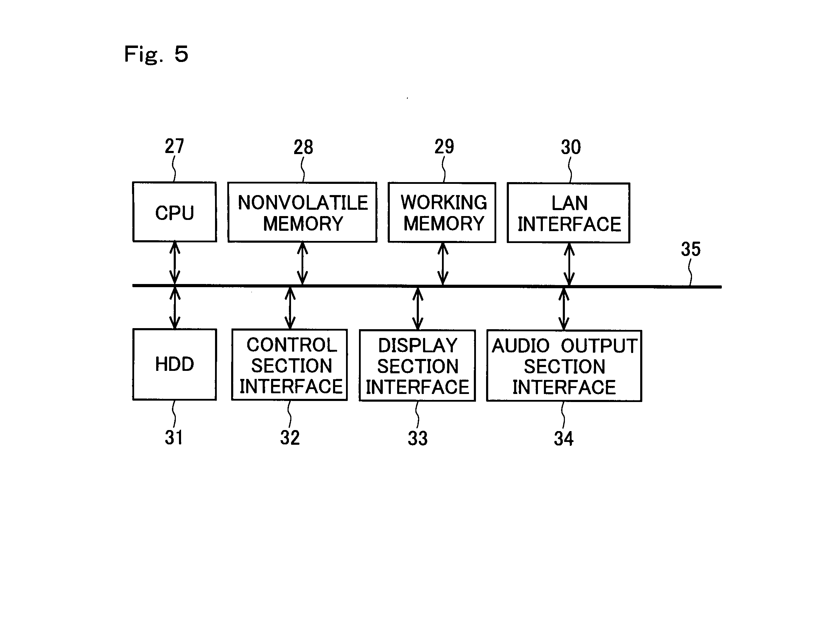

Next, a simplified configuration example of a PC capable of being employed as the operation PC 8 or the maintenance PC 9 is shown in Fig. 5. The PC shown in Fig. 5 is provided with a CPU 27, a nonvolatile memory 28, a working memory 29, a LAN interface 30, an HDD 31, a control section interface 32, a display section interface 33, an audio output interface 34, and a bus 35. The CPU 27 and the various sections (the nonvolatile memory 28, the working memory 29, the LAN interface 30, the HDD 31, the control section interface 32, the display section interface 33, and the audio output interface 34) are connected via the bus 35. A control section (not shown) such as a mouse and/or keyboard is connected to the control section interface 32; a display section, such as a liquid crystal display device (not shown), is connected to the display section interface 33; and an audio output section, such as a speaker (not shown), is connected to the audio output interface 34. Using a specified printer (not shown) connected to the LAN interface 30, the PC shown in Fig. 5 can print out a screen image being displayed by the display section that is connected to the display section interface 33, or can archive the image as image data on the HDD 31.

In the operation PC 8, the CPU 27 controls the various sections (the nonvolatile memory 28, the working memory 29, the LAN interface 30, the HDD 31, the control section interface 32, the display section interface 33, and the audio output interface 34) in accordance with a SCADA program for operation saved in the nonvolatile memory 15. In the maintenance PC 9, on the other hand, the CPU 27 controls the various sections (the nonvolatile memory 28, the working memory 29, the LAN interface 30, the HDD 31, the control section interface 32, the display section interface 33, and the audio output interface 34) in accordance with a SCADA program for maintenance saved in the nonvolatile memory 15. A maintenance operator controls the maintenance PC 9 and records maintenance of chosen sites in the solar power plant, whereby the sites in question can be excluded from monitoring.

In the operation PC 8, "Run/Halt buttons" for each of the 115-kV transformer protective relay, the 22-kV transformer protective relays, the inverters 3, the air conditioners inside the inverter housings, and the illumination apparatuses inside the inverter housings are displayed in an appropriate fashion on a monitoring screen (described later), and start-stop control (transmission of a start-stop signal) is performed by clicking on the "Run/Halt buttons." In a case of control to activate a plurality of apparatuses simultaneously, sequential activation at given delay times would be acceptable. In order to prevent control errors, start-stop control of apparatuses is preferably accomplished through 3-action control that includes a verification procedure (click control → verification control → execution). During verification control, a message to call attention is displayed.

During use of the operation PC8 or the maintenance PC 9, the user must input a user ID and a password to log on. A database of user IDs and passwords stored in the nonvolatile memory 21 of the server computer 7 is employed to determine whether to permit logon.

In the database of user IDs and passwords, users are classified into four types: Administrator, Operator, Observer, and Limited Observer. It is possible for an Administrator to access all of the functions of "updating the solar power plant monitoring system," "editing apparatus start-stop control/display content," "browsing all screens," and "browsing limited screens." It is possible for an Operator to access only the functions of "editing apparatus start-stop control/display content," "browsing all screens," and "browsing limited screens." It is possible for an Observer to access only the functions of "browsing all screens," and "browsing limited screens." It is possible for a Limited Observer to access only the function of "browsing limited screens.

### <Monitored Content>

Measurement data transmitted from the 115-kV transformer protective relay (voltage data for the high-voltage end of each phase (of three phases), electrical current data for the high-voltage end of each phase (of three phases), effective power data, reactive power data, power factor data, effective power quantity data, reactive power quantity data, and frequency data) is received by the data transfer apparatus 10, and momentary values of the measurement data are recorded at one-minute intervals to the HDD 25 of the server computer 7.

Measurement data transmitted from the 22-kV transformer protective relays (voltage data for the high-voltage end of each phase (of three phases), electrical current data for the high-voltage end of each phase (of three phases), effective power data, reactive power data, power factor data, effective power quantity data, reactive power quantity data, and frequency data) is received by the data transfer apparatus 11, and momentary values of the measurement data are recorded at one-minute intervals to the HDD 25 of the server computer 7.

Measurement data transmitted from the inverters 3 (input voltage data, input electrical current data, input power data, output voltage data, output electrical current data, output power data, power factor data, frequency data, conversion efficiency data, total accumulated power quantity data, daily accumulated power quantity data, total on-line time data, and daily on-line time data) is received by the data transfer apparatus 12, and momentary values of the measurement data are recorded at one-minute intervals to the HDD 25 of the server computer 7. Likewise, measurement data transmitted from the meteorological-related measuring apparatuses (solar irradiance data, outside temperature data, solar cell module back surface temperature data, wind speed data, relative humidity data, rainfall quantity data) is received by the data transfer apparatus 12, and momentary values of the measurement data are recorded at one-minute intervals to the HDD 25 of the server computer 7. Likewise, measurement data transmitted from the thermometers inside the inverter housings, the air conditioner breakers, the illumination apparatus breakers, and the instrument for measuring power consumption (ambient temperature data inside the inverter housings, measurement data from the instrument for measuring power consumption) is received by the data transfer apparatus 12, and momentary values of the measurement data are recorded at one-minute intervals to the HDD 25 of the server computer 7. Likewise, measurement data transmitted from the junction boxes 5 (input voltage data, input electrical current data, internal temperature data) is received by the data transfer apparatus 12, and momentary values of the measurement data are recorded at ten-minute intervals to the HDD 25 of the server computer 7.

The server computer 7 records the momentary values for the last six months to the HDD 25, and deletes data preceding the last six months from the HDD 25. Based on the momentary values mentioned above, the server computer 7 calculates cumulative values in one-hour units, average values in one-hour units, cumulative values in one-day units, average values in one-day units, cumulative values in one-month units, average values in one-month units, cumulative values in one-year units, and average values in one-year units, records the calculated values for the last 25 years on the HDD 25, and deletes data preceding the last 25 years from the HDD 25.

Alert-related data transmitted from the 115-kV transformer switchgear (open/closed state data) is received by the server computer 7 through the 115-kV transformer protective relay and the data transfer apparatus 10. During an interval in which the content of the alert-related data shows the closed state, the alert-related data is recorded at one-second intervals to the HDD 25 of the server computer 7, and the server computer 7 controls the operation PC 8 in such a way that the operation PC 8 issues an alert. Likewise, alert-related data transmitted from the 22-kV transformer switchgears (open/closed state data) is received by the server computer 7 through the 22-kV transformer protective relays and the data transfer apparatus 11. During an interval in which the content of the alert-related data shows the closed state, the alert-related data is recorded at one-second intervals to the HDD 25 of the server computer 7, and the server computer 7 controls the operation PC 8 in such a way that the operation PC 8 issues an alert. Likewise, alert-related data transmitted from the inverters 3 (running state data, on-line state data informing of the existence or non-existence of a fault, on-line state data informing of the existence or non-existence of a wait state, and on-line state data informing of the existence or non-existence of system-affiliated protection) is received by the server computer 7 through the data transfer apparatus 12. During an interval in which the content of the alert-related data shows an abnormality of an inverter 3, the alert-related data is recorded at one-second intervals to the HDD 25 of the server computer 7, and the server computer 7 controls the operation PC 8 in such a way that the operation PC 8 issues an alert. Likewise, alert-related data transmitted from the air conditioner breakers and the illumination apparatus breakers (ON/OFF state data of the air conditioner breakers, ON/OFF state data of the illumination apparatus breakers) is received by the server computer 7. During an interval in which the content of the alert-related data shows the OFF state, the alert-related data is recorded at one-second intervals to the HDD 25 of the server computer 7, and the server computer 7 controls the operation PC 8 in such a way that the operation PC 8 issues an alert. Likewise, alert-related data transmitted from the junction boxes 5 (phase state data, surge protective device (SPD) state data) is received by the server computer 7 through the data transfer apparatus 12. During an interval in which the content of the alert-related data shows an abnormality of a junction box 5, the alert-related data is recorded at one-second intervals to the HDD 25 of the server computer 7, and the server computer 7 controls the operation PC 8 in such a way that the operation PC 8 issues an alert.

In a case in which, even after a given time period has elapsed since a start-stop command was issued, the content of the command and the state of an apparatus still fail to match, the server computer 7 controls the operation PC 8 in such a way that the operation PC 8 issues an alert. The value of the aforementioned given time period is stored in the nonvolatile memory 21 of the server computer 7, and the setting can be modified only by the Administrator.

If the measurement data discussed above exceeds previously set upper limit values or lower limit values, the server computer 7 controls the operation PC 8 in such a way that the operation PC 8 issues an alert. The upper limit values and lower limit values of the measurement data are stored in the nonvolatile memory 21 of the server computer 7, and the settings can be modified only by the Administrator.

The alerts discussed above may take place, for example, through display of a specific alert by the display section which is connected to the display section interface 33 of the operation PC 8, or by output of a specific alert sound by the audio output section which is connected to the audio output section interface 34 of the operation PC 8.

The server computer 7 has data management functions such as the following.
1) Running time
2) Time/date/month/year creation
3) Graph creation
4) Event history list

According to the (1) Running time function, the server computer 7 cumulates the running time of each apparatus of the solar power plant, and prompts the operation PC 8 to display the information, as well as prompting the operation PC 8 to display, in list form, apparatuses for which the running time at the point of registration has exceeded a set value. The list can be output as a PDF file, and printout is possible as well, on the operation PC 8.

According to the (2) Time/day/month/year creation function, the server computer 7 creates time/date/month/year information in a user-specified format for the measurement values (momentary values, average values, and cumulative values), and prompts the operation PC 8 to display the information. It is also possible to display computed values such as maximum values, minimum values, average values, and the like. The information can be output as a PDF file, and printout is possible as well, on the operation PC 8. It is moreover possible to output a CSV file of data for an interval specified by the user (example: monthly data for 2010/10/01-2011/03/31), on the operation computer 8.

According to the (3) Graph creation function, the server computer 7 prompts the operation PC 8 to display time-series change in measurement values, cumulative values, and the running condition of the apparatuses of the solar power plant, employing line graphs or bar graphs of any of one-minute unit, one-hour unit, one-day unit, one-month unit, or one-year unit form.

According to the (4) Event history list function, the operation PC 8 is prompted to display alerts, state changes, control settings, and unverified alerts in minute/hour/date/month/year order, starting from the most recent. Through selection of classes of display, all, or only some, of the display alerts, state changes, control settings, and unverified alerts can be extracted and displayed. It is possible to search the displayed data by apparatus type, installation location, or time, as well as to input comments. A PDF file or CSV file can be output on the operation computer 8, and printout is possible as well.

### <Display content and control content of operation PC>

By requesting the server computer 7 for monitoring screen data and receiving the monitoring screen data, the operation PC 8 can prompt the display section connected to the display section interface 33 of the operation PC 8 to display two monitoring screens, specifically, to bring up a multi-window display. In a case in which not all of the information can be displayed on a type of list screen, on a graphic screen, or the like, the information displayed on the screen can be moved using a scroll function executed by button control or drag control of the control section.

On the monitoring screen, all of the apparatuses and power lines used in the solar power plant are displayed by graphical symbols. Preferably, the symbols used in one-line wiring diagrams are employed as the graphical symbols. The open/closed state of the 115-kV transformer switchgear and the open/closed state of the 22-kV transformer switchgears are displayed employing symbols. The power lines displayed on the monitoring screen are preferably displayed in different colors, depending on whether or not they are conducting current. For example, they may be colored yellow-green when conducting current, and colored grey when not conducting current. For some of the measurement values, analog meter display may be performed in addition to numerical display.

When an alert is issued, the operation PC 8 forcibly prompts the display section connected to the display section interface 33 of the operation PC 8 to display an alert display screen.

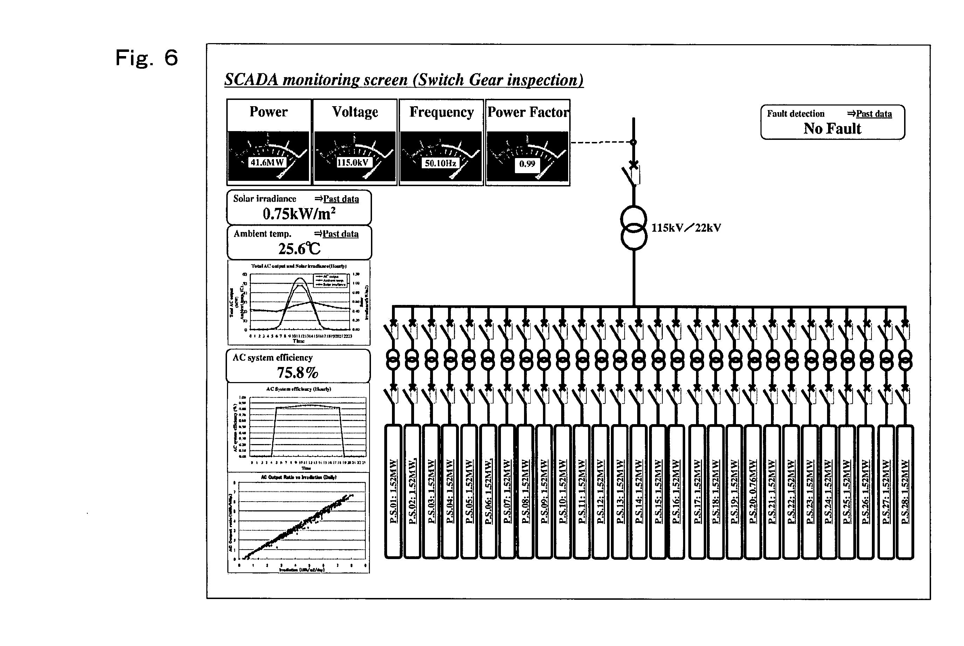

An example of a monitoring screen displayed by the display section connected to the display section interface 33 of the operation PC 8 is shown in Fig. 6.

Power generation-related displays such as the following are provided on the monitoring screen shown in Fig. 6.
1) Symbol display of open/closed state of the 1115-kV transformer switchgear
2) Symbol display of open/closed state of the 22-kV transformer switchgears (input terminal, output terminal)
3) Numerical display and analog meter display of per-minute output power data, output voltage data, frequency data, and power factor data from the 115-kV transformer protective relay
4) Graph display of per-minute output power data from the 115-kV transformer protective relay
5) Numeric display of per-minute output power data from all of the 22-kV transformer protective relays
6) Numerical display and graph display of per-minute AC system efficiency (per-minute momentary values of output power of the 115-kV transformer protective relay/per-minute momentary values of solar irradiance/total capacity of the solar cell strings)

Meteorological-related displays such as the following are also provided on the monitoring screen shown in Fig. 6.
1) Numerical display and graph display of the average value of per-minute solar irradiance (momentary values) from three actinometers installed on an inclined plane.
2) Numerical display and graph display of per-minute outside temperature

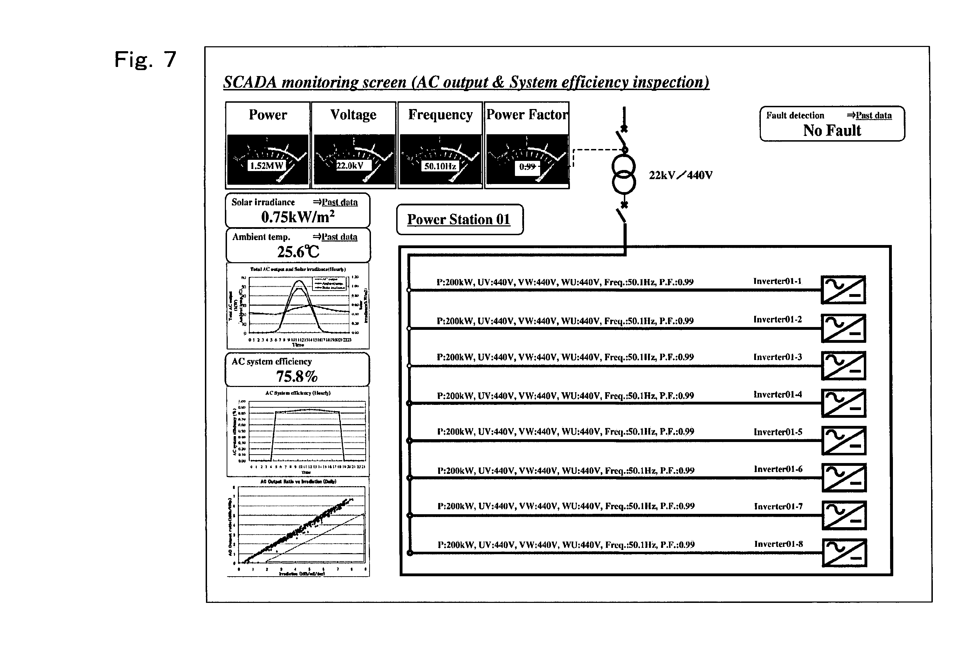

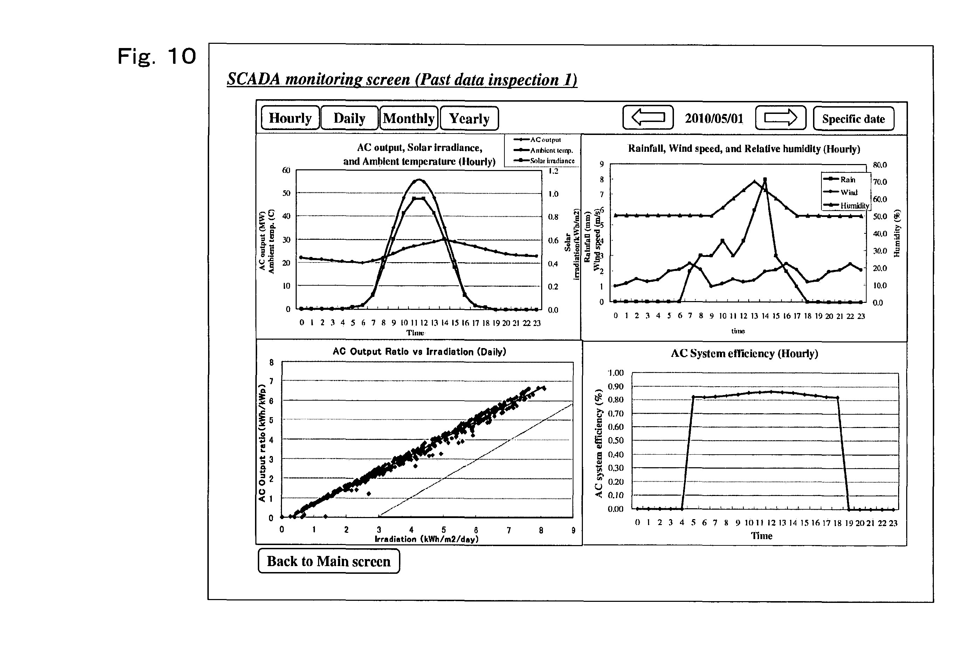

Link settings such as the following are also provided on the monitoring screen shown in Fig. 6.
1) A link setting for advancing to the monitoring screen shown in Fig. 7 (for example, in a state in which the mouse pointer is hovering over the symbol for a 22-kV transformer, one may perform key control to confirm the selection and advance to the monitoring screen shown in Fig. 7, in relation to the selected 22-kV transformer).
2) A link setting for advancing to the monitoring screen shown in Fig. 10 (for example, a link button for advancing to the monitoring screen shown in Fig. 10 is displayed, and in a state in which the mouse pointer is hovering over the link button, one may perform key control to confirm the selection and advance to the monitoring screen shown in Fig. 10).

Next, another example of a monitoring screen displayed by a display section connected to the display section interface 33 of the operation PC 8 is shown in Fig. 7.

Power generation-related displays such as the following are provided on the monitoring screen shown in Fig. 7.
1) Display of the identification code of the selected 22-kV transformer (in the drawing, "Power Station 01")
2) Symbol display of the open/closed state of the 22-kV transformer switchgear (input terminal, output terminal) corresponding to the selected 22-kV transformer
3) Numerical display and analog meter display of per-minute output power data, output voltage data, frequency data, and power factor data from the 22-kV transformer protective relay corresponding to the selected 22-kV transformer
4) Numerical display of per-minute output power data, output voltage data for each phase, frequency data, and power factor data from all inverters connected to the selected 22-kV transformer
5) Numerical display and graph display of per-minute AC system efficiency (per-minute momentary values of output power of the 115-kV transformer protective relay/per-minute momentary values of solar irradiance/total capacity of the solar cell strings)

On the monitoring screen shown in Fig. 7, a meteorological-related display comparable to that on the monitoring screen shown in Fig. 6 is provided.

Link settings such as the following are also provided on the monitoring screen shown in Fig. 7.
1) A link setting for returning to the monitoring screen shown in Fig. 6 (for example, a link button for returning to the monitoring screen shown in Fig. 6 is displayed, and in a state in which the mouse pointer is hovering over the link button, one may perform key control to confirm the selection and return to the monitoring screen shown in Fig. 6).
2) A link setting for advancing to the monitoring screen shown in Fig. 10 (for example, a link button for advancing to the monitoring screen shown in Fig. 10 is displayed, and in a state in which the mouse pointer is hovering over the link button, one may perform key control to confirm the selection and advance to the monitoring screen shown in Fig. 10).

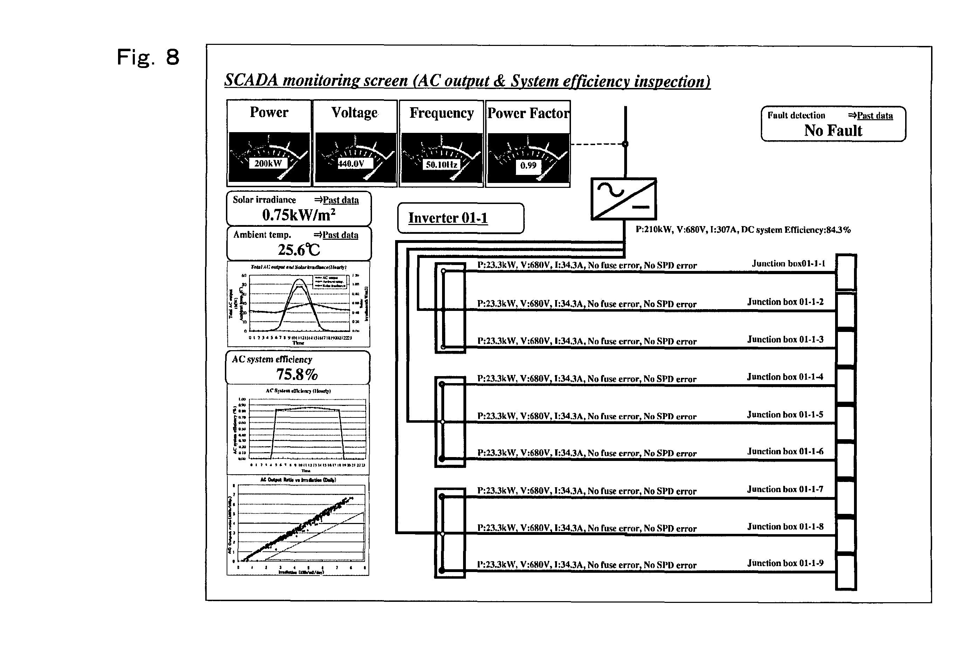

Next, yet another example of a monitoring screen displayed by a display section connected to the display section interface 33 of the operation PC 8 is shown in Fig. 8.

Power generation-related displays such as the following are provided on the monitoring screen shown in Fig. 8.
1) Display of the identification code of the selected inverter (in the drawing, "Inverter 01-1")
2) Numerical display and analog meter display of per-minute output power data, output voltage data, frequency data, and power factor data from the selected inverter
3) Numerical display of per-minute input power sum data, input power average value data, and input electrical current sum data from the selected inverter
4) Numerical display of per-ten-minute output power data, output voltage data, and output electrical current data, from all junction boxes connected to the selected inverter via collector boxes, and display regarding the existence or non-existence of faults for phase state data and for SPD state data, from all junction boxes connected to the selected inverter via collector boxes
5) Numerical display of per-minute DC system efficiency (per-minute momentary values of input power of the inverters/per-minute momentary values of solar irradiance)
6) Numerical display and graph display of per-minute AC system efficiency (per-minute momentary values of output power of the 115-kV transformer protective relay/per-minute momentary values of solar irradiance/total capacity of the solar cell strings)

On the monitoring screen shown in Fig. 8, a meteorological-related display comparable to that on the monitoring screen shown in Fig. 6 is provided.

Link settings such as the following are also provided on the monitoring screen shown in Fig. 8.
1) A link setting for returning to the monitoring screen shown in Fig. 7 (for example, a link button for returning to the monitoring screen shown in Fig. 7 is displayed, and in a state in which the mouse pointer is hovering over the link button, one may perform key control to confirm the selection and return to the monitoring screen shown in Fig. 7).
2) A link setting for advancing to the monitoring screen shown in Fig. 10 (for example, a link button for advancing to the monitoring screen shown in Fig. 10 is displayed, and in a state in which the mouse pointer is hovering over the link button, one may perform key control to confirm the selection and advance to the monitoring screen shown in Fig. 10).

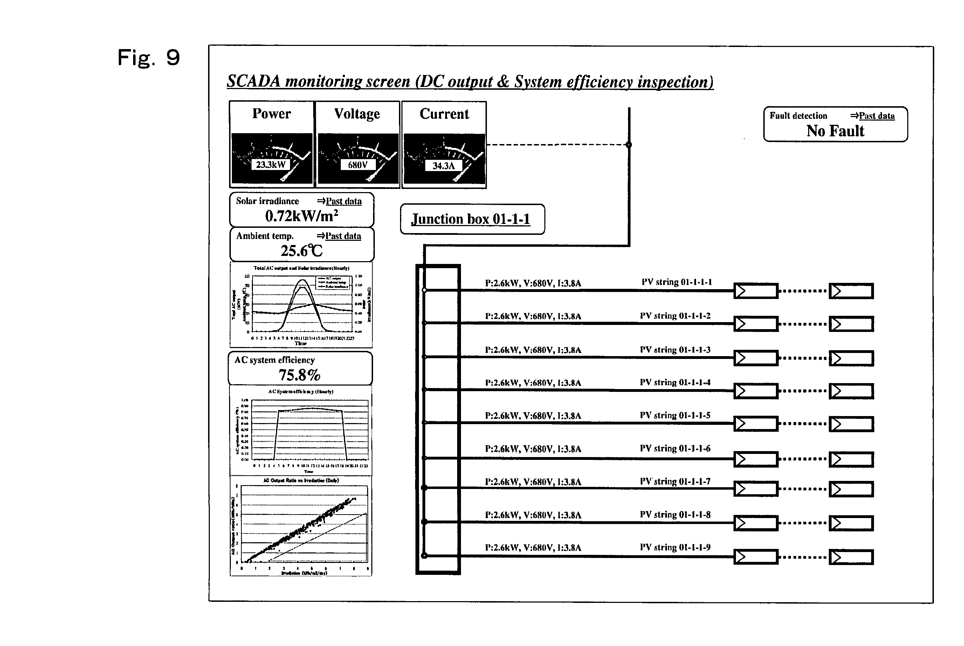

Power generation-related displays such as the following are provided on the monitoring screen shown in Fig. 9.
1) Display of the identification code of the selected junction box (in the drawing, "Junction box 01-1-1")
2) Numerical display and analog meter display of per-ten-minute output power data, output voltage data, and output electrical current data from the selected junction box
3) Numerical display of per-ten-minute output power data, output voltage data, and output electrical current data from all solar cell strings connected to the selected inverter
4) Numerical display and graph display of per-minute AC system efficiency (per-minute momentary values of output power of the 115-kV transformer protective relay/per-minute momentary values of solar irradiance/total capacity of the solar cell strings)

On the monitoring screen shown in Fig. 9, a meteorological-related display comparable to that on the monitoring screen shown in Fig. 6 is provided.

Link settings such as the following are also provided on the monitoring screen shown in Fig. 9.
1) A link setting for returning to the monitoring screen shown in Fig. 8 (for example, a link button for returning to the monitoring screen shown in Fig. 8 is displayed, and in a state in which the mouse pointer is hovering over the link button, one may perform key control to confirm the selection and return to the monitoring screen shown in Fig. 7).
2) A link setting for advancing to the monitoring screen shown in Fig. 10 (for example, a link button for advancing to the monitoring screen shown in Fig. 10 is displayed, and in a state in which the mouse pointer is hovering over the link button, one may perform key control to confirm the selection and advance to the monitoring screen shown in Fig. 10).

Next, yet another example of a monitoring screen displayed by a display section connected to the display section interface 33 of the operation PC 8 is shown in Fig. 10.

Power generation-related displays such as the following are provided on the monitoring screen shown in Fig. 10.
1) Display of a line graph in which the horizontal axis is time of day, and the vertical axis is 115 kV AC output power in one-minute units
2) Display of a line graph in which the horizontal axis is time of day, and the vertical axis is AC system efficiency in one-minute units

Meteorological-related displays such as the following are provided on the monitoring screen shown in Fig. 10.
1) Display of a line graph in which the horizontal axis is time of day, and the vertical axis is inclined plane solar irradiance and rainfall amount, in one-minute units
2) Display of a line graph in which the horizontal axis is time of day, and the vertical axis is outside temperature, wind speed, and relative humidity, in one-minute units

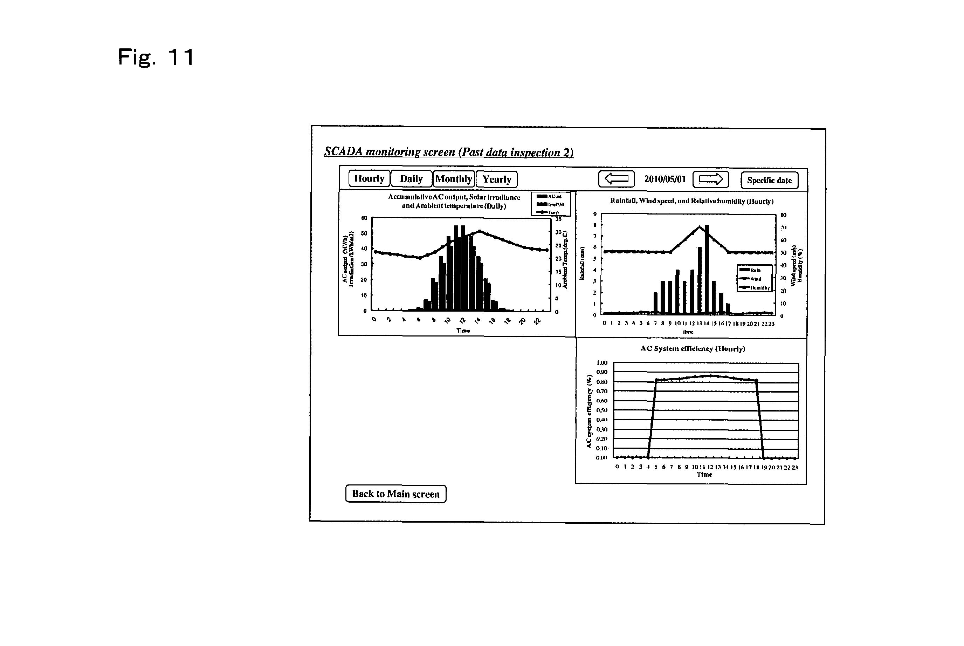

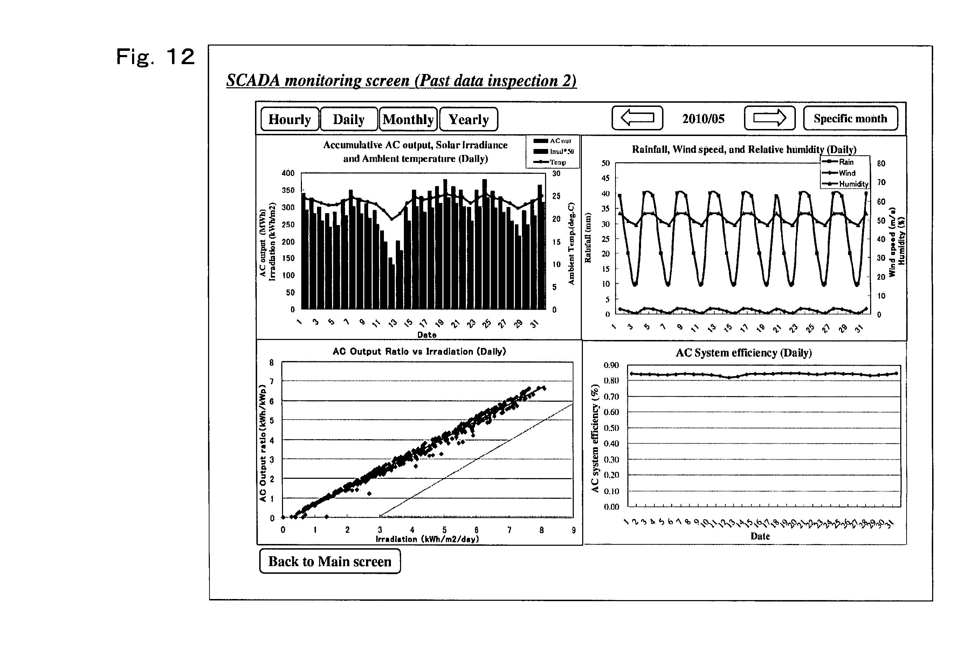

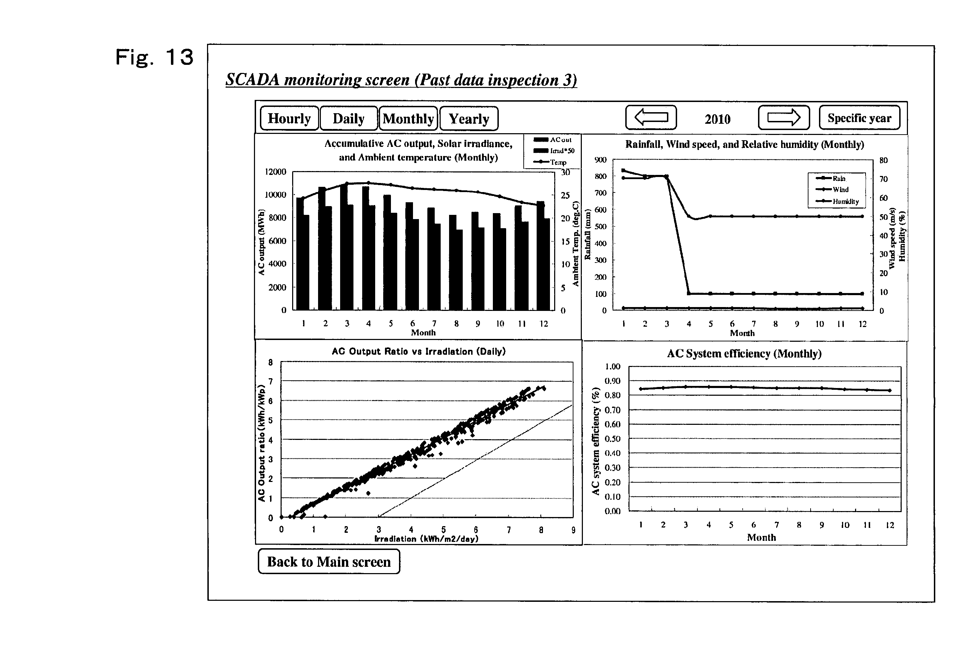

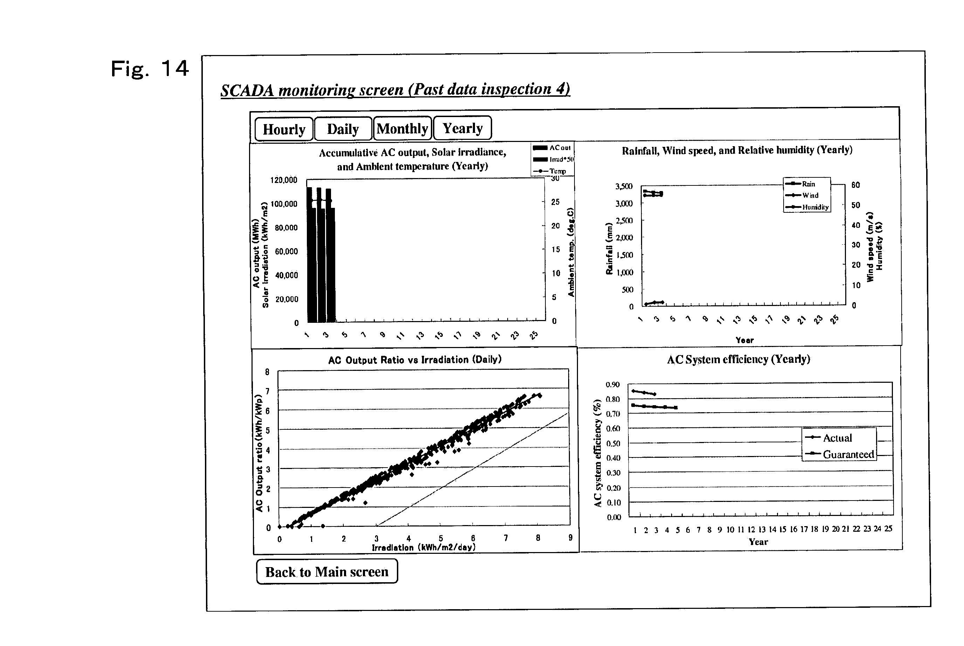

Link settings such as the following are also provided on the monitoring screen shown in Fig. 10.
1) Display of a link button for advancing to the graph of the previous day
2) Display of a link button for advancing to the graph of the next day
3) Display of a link button for advancing to the graph of a specified day (in a state in which the mouse pointer is hovering over the link button, one may perform key control to confirm the selection and advance to the input screen for the specified day)
4) A link setting for returning to the monitoring screen shown in Fig. 6 (for example, a link button for returning to the monitoring screen shown in Fig. 6 is displayed, and in a state in which the mouse pointer is hovering over the link button, one may perform key control to confirm the selection and return to the monitoring screen shown in Fig. 6).
5) Display of a link button for advancing to the monitoring screen shown in Fig. 11
6) Display of a link button for advancing to the monitoring screen shown in Fig. 12
7) Display of a link button for advancing to the monitoring screen shown in Fig. 13
8) Display of a link button for advancing to the monitoring screen shown in Fig. 14

Next, yet another example of a monitoring screen displayed by a display section connected to the display section interface 33 of the operation PC 8 is shown in Fig. 11.

Power generation-related displays such as the following are provided on the monitoring screen shown in Fig. 11.
1) Display of a bar graph in which the horizontal axis is time of day, and the vertical axis is cumulative 115 kV AC output power in one-hour units
2) Display of a line graph in which the horizontal axis is time of day, and the vertical axis is AC system efficiency in one-hour units

Meteorological-related displays such as the following are provided on the monitoring screen shown in Fig. 11.
1) Display of a bar graph in which the horizontal axis is time of day, and the vertical axis is cumulative inclined plane solar irradiance and cumulative rainfall amount, in one-hour units
2) Display of a line graph in which the horizontal axis is time of day, and the vertical axis is average outside temperature, average wind speed, and average relative humidity, in one-hour units

Link settings such as the following are also provided on the monitoring screen shown in Fig. 11.
1) Display of a link button for advancing to the graph of the previous day
2) Display of a link button for advancing to the graph of the next day
3) Display of a link button for advancing to the graph of a specified day (in a state in which the mouse pointer is hovering over the link button, one may perform key control to confirm the selection and advance to the input screen for the specified day)
4) A link setting for returning to the monitoring screen shown in Fig. 6 (for example, a link button for returning to the monitoring screen shown in Fig. 6 is displayed, and in a state in which the mouse pointer is hovering over the link button, one may perform key control to confirm the selection and return to the monitoring screen shown in Fig. 6).
5) Display of a link button for advancing to the monitoring screen shown in Fig. 10
6) Display of a link button for advancing to the monitoring screen shown in Fig. 12
7) Display of a link button for advancing to the monitoring screen shown in Fig. 13
8) Display of a link button for advancing to the monitoring screen shown in Fig. 14

Next, yet another example of a monitoring screen displayed by a display section connected to the display section interface 33 of the operation PC 8 is shown in Fig. 12.

Power generation-related displays such as the following are provided on the monitoring screen shown in Fig. 12.
1) Display of a bar graph in which the horizontal axis is day of the month, and the vertical axis is cumulative 115 kV AC output power in one-day units
2) Display of a line graph in which the horizontal axis is day of the month, and the vertical axis is AC system efficiency in one-day units

Meteorological-related displays such as the following are provided on the monitoring screen shown in Fig. 12.
1) Display of a bar graph in which the horizontal axis is day of the month, and the vertical axis is cumulative inclined plane solar irradiance and cumulative rainfall amount, in one-day units
2) Display of a line graph in which the horizontal axis is day of the month, and the vertical axis is average outside temperature, average wind speed, and average relative humidity, in one-day units

Link settings such as the following are also provided on the monitoring screen shown in Fig. 12.
1) Display of a link button for advancing to the graph of the previous month
2) Display of a link button for advancing to the graph of the next month
3) Display of a link button for advancing to the graph of a specified month (in a state in which the mouse pointer is hovering over the link button, one may perform key control to confirm the selection and advance to the input screen for the specified month)
4) A link setting for returning to the monitoring screen shown in Fig. 6 (for example, a link button for returning to the monitoring screen shown in Fig. 6 is displayed, and in a state in which the mouse pointer is hovering over the link button, one may perform key control to confirm the selection and return to the monitoring screen shown in Fig. 6).
5) Display of a link button for advancing to the monitoring screen shown in Fig. 10
6) Display of a link button for advancing to the monitoring screen shown in Fig. 11
7) Display of a link button for advancing to the monitoring screen shown in Fig. 13
8) Display of a link button for advancing to the monitoring screen shown in Fig. 14

Next, yet another example of a monitoring screen displayed by a display section connected to the display section interface 33 of the operation PC 8 is shown in Fig. 13.

Power generation-related displays such as the following are provided on the monitoring screen shown in Fig. 13.
1) Display of a bar graph in which the horizontal axis is month of the year, and the vertical axis is cumulative 115 kV AC output power in one-month units
2) Display of a line graph in which the horizontal axis is month of the year, and the vertical axis is AC system efficiency in one-month units

Meteorological-related displays such as the following are provided on the monitoring screen shown in Fig. 13.
1) Display of a bar graph in which the horizontal axis is month of the year, and the vertical axis is cumulative inclined plane solar irradiance and cumulative rainfall amount, in one-month units
2) Display of a line graph in which the horizontal axis is month of the year, and the vertical axis is average outside temperature, average wind speed, and average relative humidity, in one-month units

Link settings such as the following are also provided on the monitoring screen shown in Fig. 13.
1) Display of a link button for advancing to the graph of the previous year
2) Display of a link button for advancing to the graph of the next year
3) Display of a link button for advancing to the graph of a specified year (in a state in which the mouse pointer is hovering over the link button, one may perform key control to confirm the selection and advance to the input screen for the specified year)
4) A link setting for returning to the monitoring screen shown in Fig. 6 (for example, a link button for returning to the monitoring screen shown in Fig. 6 is displayed, and in a state in which the mouse pointer is hovering over the link button, one may perform key control to confirm the selection and return to the monitoring screen shown in Fig. 6).
5) Display of a link button for advancing to the monitoring screen shown in Fig. 10
6) Display of a link button for advancing to the monitoring screen shown in Fig. 11
7) Display of a link button for advancing to the monitoring screen shown in Fig. 12
8) Display of a link button for advancing to the monitoring screen shown in Fig. 14

Next, yet another example of a monitoring screen displayed by a display section connected to the display section interface 33 of the operation PC 8 is shown in Fig. 14.

Power generation-related displays such as the following are provided on the monitoring screen shown in Fig. 14.
1) Display of a bar graph in which the horizontal axis is year of a 1-25 year range, and the vertical axis is cumulative 115 kV AC output power in one-year units
2) Display of a line graph in which the horizontal axis is year of a 1-25 year range, and the vertical axis is AC system efficiency in one-year units

Meteorological-related displays such as the following are provided on the monitoring screen shown in Fig. 14.
1) Display of a bar graph in which the horizontal axis is year of a 1-25 year range, and the vertical axis is cumulative inclined plane solar irradiance and cumulative rainfall amount, in one-year units
2) Display of a line graph in which the horizontal axis is year of a 1-25 year range, and the vertical axis is average outside temperature, average wind speed, and average relative humidity, in one-year units

Link settings such as the following are also provided on the monitoring screen shown in Fig. 14.
1) A link setting for returning to the monitoring screen shown in Fig. 6 (for example, a link button for returning to the monitoring screen shown in Fig. 6 is displayed, and in a state in which the mouse pointer is hovering over the link button, one may perform key control to confirm the selection and return to the monitoring screen shown in Fig. 6).
2) Display of a link button for advancing to the monitoring screen shown in Fig. 10
3) Display of a link button for advancing to the monitoring screen shown in Fig. 11
4) Display of a link button for advancing to the monitoring screen shown in Fig. 12
5) Display of a link button for advancing to the monitoring screen shown in Fig. 13

Next, examples of monitoring screens (alert display screens) displayed by a display section connected to the display section interface 33 of the operation PC 8 when an alert is issued are shown in Figs. 15A to 15D.

Figs. 15A to 15D are examples of alert display screens shown in a state in which a problem is occurring (a state necessitating generating an alert) in the 22-kV transformer 3 with the identification code "Power Station 01," the inverter 3 with the identification code "Inverter 01-5," the junction box 5 with the identification code "Array 01-5-1," and the 4.1 kW solar cell string 6 with the identification code "String 01-5-1-01," respectively.

In the alert display screens shown in Figs. 15A to 15D, apparatuses in which a problem is occurring are displayed in flashing red (represented by heavy dotted lines in the drawings).

Because the nonvolatile memory 21 of the server computer 7 stores associations of identification codes of different types of apparatuses so as to correspond with interconnections between the different types of apparatuses as shown in Fig. 16, links from the alert display screens of Figs. 15A to 15D are possible. Therefore, as shall be apparent, advancing in order from the alert display screen of Fig. 15A→ Fig. 15B→ Fig. 15C→ Fig. 15D is possible, as is direct advance from the alert display screen of Fig. 15A→ Fig. 15D, for example.

Moreover, because the nonvolatile memory 21 of the server computer 7 stores associations of identification codes of different types of apparatuses so as to correspond with interconnections between the different types of apparatuses as shown in Fig. 16, interconnections between apparatuses in which problems are occurring can be displayed as well, as are the identification codes displayed in flashing red (represented by heavy dotted lines in the drawings) in Fig. 15B.

In so doing, in a case in which problems have occurred in different types of apparatuses, the user can readily ascertain whether, among apparatuses in which a problem has occurred, there is a risk that the problem is occurring in an apparatus closer to the power system due to the influence of an apparatus further away from the power system, and the user (maintenance operator) can efficiently carry out repairs. For example, in a case in which a problem is occurring in a given inverter 3 and a junction box 5 connected to that inverter 3 via a collector box 4, if the problem is simply occurring in the inverter 3 due to the junction box 5 in which a problem is occurring, by repairing the problem occurring in the junction box 5, the problem occurring in the inverter 3 can be resolved without repairing the inverter 3, and therefore priority should be given to repairing the junction box 5.

Moreover, because the nonvolatile memory 21 of the server computer 7 stores associations between the identification codes of the apparatuses and address codes of the installation locations of the apparatuses as shown in Fig. 17, an apparatus in which a problem is occurring can be displayed in a format such that the installation location thereof can be discerned (the apparatus in which a problem is occurring can be displayed on a map of the solar power plant), as in Figs. 15A to 15D.

Moreover, because the nonvolatile memory 21 of the server computer 7 stores associations of identification codes apparatuses and address codes of installation locations of apparatuses as shown in Fig. 17, the user can be offered information relating to the installation location of the apparatus in which a problem is occurring.

For example, the address code of an installation location of the apparatus in which a problem is occurring can be displayed or printed out at the operation PC 8 end. In this case, where plates or the like denoting address codes of installation locations have been disposed at predetermined sites in the solar power plant, the user may refer to the plate or the like in question, and readily track down the installation location of the apparatus in which the problem is occurring.

Moreover, for example, the address code of an installation location of the apparatus in which a problem is occurring, and a map (access map) showing a route leading from an indoor administration office to the installation location of the apparatus in which the problem is occurring, can be displayed or printed out at the operation PC 8 end. In this case, the user can refer to the printed map, and more readily track down the installation location of the apparatus in which the problem is occurring. In order to obviate the need to print, data for the address code of an installation location of the apparatus in which a problem is occurring and for a map (access map) showing a route leading from an indoor administration office to the installation location of the apparatus in which the problem is occurring can be transferred from the operation PC 8 to a mobile terminal (not shown).

Link settings such as the following are also provided on the alert display screens shown in Figs. 15A to 15D.
1) Display of a link button (not shown) for advancing to the monitoring screen shown in Fig. 10
2) Display of a link button (not shown in Figs. 15A to 15C) for advancing to a screen that displays an event history list
3) Display of a link button (not shown in Figs. 15A to 15C) for advancing to a screen that performs a display relating to a recommended course of action (for example, a message display to "Disconnect OO" or "Call phone number ΔΔ-ΔΔΔΔ at 00 Company."

Advance to a screen that performs a display relating to a recommended course of action can be executed automatically once a predetermined time period has elapsed following display of the alert display screens shown in Figs. 15A to 15D, rather than being executed using a link button.

The settings for content of displays relating to recommended courses of action can be modified only by an administrator or operator.

While the present invention has been described hereinabove in terms of the presently preferred embodiments, the scope of the present invention is not limited thereby, and various additional modifications can be executed without departing from the spirit of the invention. For example, the type and number of apparatuses constituting the large-scale solar power plant discussed above are merely exemplary; likewise, the type and number of apparatuses constituting the solar power plant monitoring system discussed above are merely exemplary; furthermore, the monitored items and monitoring screens of the solar power plant monitoring system discussed above, as well as the method of data transfer among the apparatuses constituting the solar power plant monitoring system, are merely exemplary.

### Industrial Applicability

The solar power plant monitoring system according to the present invention is employed for monitoring a solar power system, and is particularly suitable for monitoring MW-class large-scale solar power plants.

### List of Reference Signs

- 1: 115-kV transformer
- 2: 22-kV transformer
- 3: Inverter
- 4: Collector box
- 5: Junction box
- 6: 4.1-class solar cell string
- 7: Server computer
- 8: Operation PC
- 9: Maintenance PC
- 10: 115-kV transformer-related data transfer apparatus
- 11: 22-kV transformer-related data transfer apparatus
- 12: Inverter-related data transfer apparatus
- 13: Optical network
- 14,20,27: CPU
- 15,21,28: Nonvolatile memory
- 16, 18: Input/output interface
- 17, 23, 29: Working memory
- 19, 26, 35: Bus
- 22: Optical interface
- 24, 30: LAN interface
- 25,31: HDD
- 32: Control section interface
- 33: Display section interface
- 34: Audio output section interface

## Claims

1. A solar power plant monitoring system for monitoring a solar power plant, the solar power plant monitoring system being provided with a storage unit for associating identification codes of a plurality of different types of apparatuses to be monitored which constitute the solar power plant, so as to correspond with interconnections between the plurality of different types of apparatuses to be monitored which constitute the solar power plant; and for storing the associations.

2. The solar power plant monitoring system according to Claim 1, associations of identification codes of a plurality of different types of apparatuses to be monitored which constitute the solar power plant being used to output information relating to interconnections between apparatuses in which problems have occurred.

3. The solar power plant monitoring system according to Claim 1 or 2, a first storage unit, which is the aforementioned storage unit, or a second storage unit, which is separate from the first storage unit, associating and storing an address code of an installation location and the identification code for each of the plurality of different types of apparatuses to be monitored which constitute the solar power plant.

4. The solar power plant monitoring system according to Claim 3, the address codes of the installation locations being address codes specifying, by rows and columns, partitions obtained by partitioning an area of the solar power plant into grid form.

5. The solar power plant monitoring system according to Claim 3 or 4, the first storage unit, the second storage unit, or a third storage separate from both the first storage unit and the second storage unit storing map data for the area of the solar power plant, and correspondence relationships between the map data and the address codes.

6. A solar power system provided with
a solar power plant; and
the solar power plant monitoring system according to any of Claims 1 to 5 for monitoring the solar power plant.
